(19) **Europäisches Patentamt**
**European Patent Office**
**Office européen des brevets**

(11) **EP 4 258 760 A1**

(12) **EUROPEAN PATENT APPLICATION**

(43) Date of publication:
**11.10.2023 Bulletin 2023/41**

(21) Application number: **23166720.5**

(22) Date of filing: **05.04.2023**

(51) International Patent Classification (IPC):
**H04W 56/00** (2009.01)

(52) Cooperative Patent Classification (CPC):
**H04W 56/001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.04.2022 FI 20225303**

(71) Applicant: **Wirepas Oy**
**33720 Tampere (FI)**

(72) Inventor: **JUVEN, Ville**
**33560 Tampere (FI)**

(74) Representative: **Berggren Oy**
**P.O. Box 16**
**Eteläinen Rautatiekatu 10A**
**00101 Helsinki (FI)**

(54) **A TIMING SYSTEM FOR A WIRELESS COMMUNICATION NETWORK**

(57) The invention relates to a timing system (100) for a wireless communication network (102) comprising a plurality of communication devices (104, 104a, 104b, 104c, 104d). The timing system comprises at least one cluster head device (104b) associated with at least one beaconing cluster member device (104c) configured to transmit beacon messages. The at least one cluster head device (104b) and its associated at least one beaconing cluster member device (104c) belong to the plurality of communication devices (104, 104a, 104b, 104c, 104d) of the wireless communication network (102). The at least one beaconing cluster member device (104c) is configured to periodically transmit a periodical message to its cluster head device (104b). The periodical message comprises timing information indicating a timing of a next beacon message of the beaconing cluster member device (104c) transmitting the periodical message. The invention relates also to a timing method for a wireless communication network (102), a beaconing cluster member device (104c) for a wireless communication network (102), a timing method for the beaconing cluster member device (104c), a computer program (546), and a tangible non-volatile computer readable medium.

**FIG. 1B**

EP 4 258 760 A1

**Description**

TECHNICAL FIELD

The invention concerns in general the technical field of a wireless communication networks. Especially the invention concerns timing of beacon messages in wireless communication networks.

BACKGROUND

Typically, in wireless communication systems timing schedules are defined for communication devices of the wireless communication system to save energy and to avoid transmission collisions. For example, in point-to-point topologies and star topologies the timing schedules are typically defined by a communication device operating in a master role or in an access point role. However, in wireless communication systems without a communication device operating in the master or access point role, such as in decentralized multi-hop topologies and in mesh topologies, the timing schedule -based synchronizing approach is typically not available or it may be at least limited.

In multi-hop topologies the communication devices may benefit in collecting information regularly from beacon messages broadcasted by neighbouring communication devices. One or more of the neighbouring communication devices broadcasting the beacon messages may be associated member devices of the communication device that is collecting the information. However, typically the neighbouring communication devices broadcast their beacon messages with a timing that they select independently. The neighbouring communication devices may also transmit their beacon messages on frequency channels that they select independently. Therefore, it is very inefficient - in terms of using time and energy - for the communication devices to look for the beacon messages from their neighbouring communication devices, even from the neighbouring communication devices that are associated member devices of the communication device that is collecting the information.

SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a timing system, timing methods, a beaconing cluster member device, a computer program, and a computer readable medium for a wireless communication network. Another objective of the invention is that the timing system, the timing methods, the beaconing cluster member device, the computer program, and the computer readable medium for a wireless communication network enable information share from beaconing cluster member devices to the respective cluster head devices in an effective manner.

The objectives of the invention are reached by a timing system, timing methods, a beaconing cluster member device, a computer program, and a computer readable medium as defined by the respective independent claims.

According to a first aspect, a timing system for a wireless communication network comprising a plurality of communication devices is provided, wherein the timing system comprises at least one cluster head device associated with at least one beaconing cluster member device configured to transmit beacon messages, wherein the at least one cluster head device and its associated at least one beaconing cluster member device belong to the plurality of communication devices of the wireless communication network, and wherein the at least one beaconing cluster member device is configured to periodically transmit a periodical message to its cluster head device, wherein the periodical message comprises timing information indicating a timing of a next beacon message of the beaconing cluster member device transmitting the periodical message.

In response to receiving the periodical message from its associated at least one beaconing cluster member device, the cluster head device may be configured to adjust its receiving window margin for receiving the next beacon message from the at least one beaconing cluster member device based on the timing information comprised in the received periodical message.

Alternatively or in addition, the at least one beaconing cluster member device may be configured to transmit the next periodical message to its cluster head device in response to detecting that a drift of its beacon timing meets a drift threshold value.

The at least one beaconing cluster member device may be configured to define the drift of its beacon timing on a basis of a drift of a beacon timing of the cluster head device and a time expired from the transmission of the previous periodical message to the cluster head device by the beaconing cluster member device.

Alternatively or in addition, the at least one beaconing cluster member device may be configured to transmit the next periodical message to its cluster head device in response to receiving from the cluster head device a beacon message comprising a request to transmit the next periodical message.

The periodical message many be an association request message.

The association request message may be an association request message according to Digital European Cordless Telecommunication 2020 (DECT-2020).

Alternatively or in addition, the at least one beaconing cluster member device may further be configured to transmit to its cluster head device neighbouring timing information indicating a timing of a next beacon message of one or more neighbouring devices of the at least one beaconing cluster member device, wherein the one or more neighbouring devices belong to the plurality of communication devices of the wireless communication network.

The at least one beaconing cluster member device may be configured to transmit the neighbouring timing information to its cluster head device by including the neighbouring timing information in the next beacon message to be transmitted.

According to a second aspect, a timing method for a wireless communication network comprising a plurality of communication devices is provided, wherein the method comprising following steps of: presenting at least one cluster head device associated with at least one beaconing cluster member device configured to transmit beacon messages, wherein the at least one cluster head device and its associated at least one beaconing cluster member device belong to the plurality of communication devices of the wireless communication network; and transmitting periodically, by the at least one beaconing cluster member device, a periodical message to its cluster head device, wherein the periodical message comprises timing information indicating a timing of a next beacon message of the beaconing cluster member device transmitting the periodical message.

According to a third aspect, a beaconing cluster member device for a wireless communication network is provided, wherein the beaconing cluster member device comprises: a controller, and a radio communicator for operating as a radio node device, wherein beaconing cluster member device is configured to: transmit beacon messages; and transmit periodically, by the radio communicator, a periodical message to its cluster head device, wherein the periodical message comprises timing information indicating a timing of a next beacon message of the beaconing cluster member device transmitting the periodical message.

According to a fourth aspect, a timing method for the beaconing cluster member device as described above is provided, wherein the method comprises following step of: transmitting periodically, by a radio communicator of a beaconing cluster member device, a periodical message to its cluster head device, wherein the periodical message comprises timing information indicating a timing of a next beacon message of the beaconing cluster member device transmitting the periodical message.

According to a fifth aspect, a computer program is provided, wherein the computer program comprises instructions, which, when the computer program is executed by a computer, cause the computer to carry out at least the steps of the method as described above.

According to a sixth aspect, a tangible non-volatile computer readable medium comprising the computer program described above is provided.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

BRIEF DESCRIPTION OF FIGURES

The embodiments of the invention are illustrated by way of example, and not by way of limitation, in the figures of the accompanying drawings.

Figure 1A illustrates schematically an example of a timing system in a wireless communication environment.

Figure 1B schematically illustrates an example of a timing system in a wireless communication network environment implemented in a cluster tree topology.

Figure 2 illustrates schematically an example of an association process between an associating device and a cluster head device.

Figure 3A illustrates schematically a flowchart of an example timing method.

Figure 3B illustrates schematically a flowchart of an example of defining an interval between a transmission of a previous periodical message and a transmission of a next periodical message.

Figure 4 illustrates schematically a non-limiting example format for an association request message.

Figure 5 illustrates schematically an example of operational parts of a wireless radio communication device.

DESCRIPTION OF THE EXEMPLIFYING EMBODIMENTS

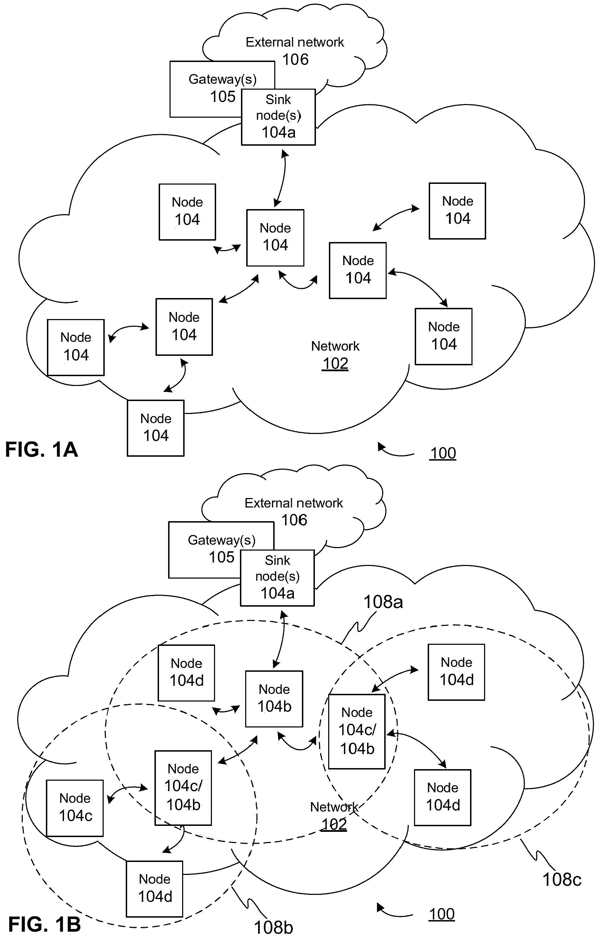

Figure 1 illustrates an example of a timing system 100, which operates in a wireless communication environment. The environment comprises a wireless radio communication network (system) 102, which comprises a plurality of wireless radio communication devices (nodes) 104. The devices 104 operate on a same spectrum comprising one or more frequency bands at a same geographical area, e.g. within the presented environment. Each of the one or more frequency bands may comprise one or more frequency channels. The use of same spectrum enables a bidirectional radio communication between the devices 104 in the network 102, whereupon radio transmissions transmitted by one device 104 may be received by another device 104 and vice versa.

The system 100 may be applied to any wireless radio communication network 102 that uses packet transmissions in the communication, i.e. in data exchange. Preferably, the system 100 may be applied to any wireless radio communication network that may be used for multi-hop communication between the devices 104, i.e. the packets may be delivered over at least two consecutive radio links. The system 100 may be applied in wireless communication networks 102 complying Digital European Cordless Telecommunications (DECT-2020) standard. Some non-limiting examples to which the system 100 may also be applied may comprise, but is not limited to, a wireless multi-hop network, a wireless mesh network, e.g. wireless sensor network (WSN), a Bluetooth Low Energy (BLE) mesh network, a Zigbee network, a Thread network, a Public Land Mobile Network (PLMN), a Wireless Local Area Network (WLAN), a Low Power Wide Area Network (LPWAN), a cellular based local area network, a cellular network, and/or any other wireless networks. One example of WSN is explained in patent publication US 7,830,838.

The DECT-2020 standard is a radio access technology developed by ETSI. The DECT-2020 supports massive machine-type communication (mMTC) and ultrareliable low latency communication (URLLC). On Physical (PHY) layer, the key technology components of the DECT-2020 are Orthogonal frequency-division multiplexing (OFDM), adaptive modulation and coding schemes (MCS), Modern Channel coding methods (Turbo, LDPC, Convolutional coding), Hybrid Automatic Repeat Request (HARQ) for both scheduled and contention based transmissions, and a support of multi-antenna transmissions with different Multiple-Input and Multiple-Output (MIMO) streams. On Medium access (MAC) layer and from system aspects, the key technology components of the DECT-2020 are a support of high number of Internet of Things (IoT) sensors, actuators, and other industrial applications; support of Mesh network topology, support of URLLC communication with very short delay (typical application may be wireless microphones); operation on frequencies that are license exempt; and support of multiple overlapping non-coordinated networks with cognitive radio capabilities to share spectrum resources between multiple networks.

As above has been explained, each device 104 is able to provide, by means of its radio communicator 536, the bi-directional radio communication with at least one other device 104. This means that each device 104 may operate as a transmitter, as a receiver, or as a transmitter-receiver when each device 104 is able to transmit at least one message to other device(s) 104 and to receive at least one message from the other device(s) 104 in the network 102.

The network 102 may also comprise at least one gateway device 105, e.g. one, two, three, four, or more gateway devices. Each gateway device 105 operates as a gateway between the network 102 and other external network(s) 106, e.g. Internet, and delivers data in the network 102 and from the network 102. Each gateway device 105 communicates with at least one sink device (node) 104a, e.g. one, two, three, four, or more sink devices, and each sink device 104a operates as a radio interface for the gateway device 105 in the network 102. The at least one sink device 104a belongs to the plurality of devices 104 of the network 102. Each sink device 104a may locate physically in connection with the gateway device 105 or separately in a different part of the network 102. If the gateway 105 comprises several sink devices 104a, one may locate in connection with the gateway device 105 and others separately in different parts of the network 102.

The sink device(s) 104a is a fixed router device (router), but other node devices 104 are able to operate in different fixed or non-fixed roles in the network 102. The other devices 104 in the system 100 are router devices, i.e. devices operating in a router role, and non-router devices (non-routers), i.e. devices operating in a non-router role, depending on whether a device 104 needs to participate in data forwarding. One method for selecting router and non-router roles may be e.g. in accordance with the method explained in patent publication US 10,499,264.

Each router device 104 maintains a connectivity of the network 102 and routes (forwards) data of other devices 104 when necessary. Each non-router device 104 is able to provide a bi-directional communication in order to transmit its own data and to receive data directed for it similarly as sink and router devices 104, but the non-router device does not route data of other devices 104. Each device 104 may be able to operate at least as a router or non-router device. Alternatively, at least part of the devices 104 may be able to operate as a router or non-router device, and one or more of the devices 104 may be able to operate only as a router device or only as a non-router device.

The network 102 comprises the devices 104 so that all devices 104 are not able to communicate directly with the sink device(s) 104a (gateway device(s) 105) due to radio conditions, e.g. extensive distance between the devices 104, interference or signal fading between the devices 104; and limited radio range, whereupon it is necessary to use multi-link (multi-hop) communication between each device 104 and the sink device 104a.

The network 102 may be implemented in a cluster tree topology, where the network 102 comprises at least one cluster 108. The at least one cluster 108a-108c may be dynamically or statically formed. Each cluster 108a-108c may comprise a cluster head device 104b and at least one cluster member device 104c, 104d. The at least one cluster member device 104c, 104d is associated with the cluster head device 104b to belong to the cluster 108a-108c and to operate as the at least one cluster member device 104c, 104d. One or more cluster member devices 104c of a cluster 108a-108c may also operate as the cluster head devices 104b for other clusters 108a-108c of the network 102. In other words, one or more clusters 108a-108c may each comprise one or more cluster member devices 104c, which may also operate as the cluster head devices 104b for other clusters 108a-108c of the network 102. In yet another words, one or more cluster member devices 104c may simultaneously operate in two different roles, i.e. in a cluster member role of one cluster 108a-108c and in a cluster head role of other cluster 108a-108c. When operating in the two roles, each cluster member device 104c is momentarily capable of perform one or more operations of only one role, i.e. only one or more operations of the cluster member role of one cluster 108a-108c or only one or more operations of the cluster head role of the other cluster 108a-108c. The router devices are capable of operating as the cluster head devices 104b and/or as the cluster member devices 104c. The non-router devices are capable of operating as the cluster member devices 104d. Therefore, each cluster 108a-108c of the network 102 may comprise at least one cluster member device 104c (i.e. router cluster member device(s)) configured to transmit beacon messages, i.e. at least one beaconing cluster member device 104c, and/or at least one cluster member device 104d (i.e. non-router cluster member device(s)). The sink devices 104a are also capable of operating as the cluster head devices 104b.

Figure 1B schematically illustrates an example of the timing system 100, which operates in the wireless communication network 102 implemented in the cluster tree topology. The timing system 100 and the network 102 of Figure 1B are similar to the timing system 100 and the network 102 of Figure 1A, but Figure 1B illustrates the cluster tree topology of the network 102 more in detail. In the example of Figure 1B the network 102 comprises three clusters 108a-108c, each cluster 108a-108c comprising one cluster head device 104b and at least one cluster member device 104c, 104d. The cluster 108a of the example of Figure 1B comprises the cluster head device 104b and one cluster member device 104d operating as non-router device and two beaconing cluster member devices 104c. The cluster 108b of the example of Figure 1B comprises the cluster head device 104b and one cluster member device 104d operating as non-router device and one beaconing cluster member device 104c. The cluster 108c of the example of Figure 1B comprises the cluster head device 104b and two cluster member devices 104d operating as non-router devices. The beaconing cluster member devices 104c of the cluster 108a are operating as the cluster head devises 104b of the other clusters 108b, 108c. In other words, one of the beaconing cluster member devices 104c of the cluster 108a is operating as the cluster head device 104b of the cluster 108b and the other one of the beaconing cluster member devices 104c of the cluster 108a is operating as the cluster head device 104b of the cluster 108c. Therefore, the reference number 104c/104b is used for these two devices in Figure 1B. Figure 1B illustrates only one non-limiting example, and the network 102 may also comprise any other number of clusters 108a-108c and each cluster 108a-108c may comprise any other number of cluster member devices 104c, 104d.

Each router device and each sink device 104a of the network 102 is configured to transmit periodically beacon messages to provide a possibility for other devices 104 to associate and to serve the other devices 104 in data routing. The beacon messages may comprise cluster beacon messages and/or network beacon messages. The cluster beacon message may comprise frame information, slot timing information, radio parameter information, and/or radio resource information. The information (e.g. the frame information, the slot timing information, the radio parameter information, and/or the radio resource information) comprised in the cluster beacon message may comprise information of the device 104 transmitting the cluster beacon message itself. In addition, the information (e.g. the frame information, the slot timing information, the radio parameter information, and/or the radio resource information) comprised in the cluster beacon message may comprise information of one or more neighbouring devices of the device 104 transmitting the cluster beacon message. The cluster beacon message may be used to provide the frame information and the slot timing information to the cluster 108a-108c. Alternatively or in addition, the cluster beacon message may be used to announce the radio parameter information and the radio resource information so that other devices 104 may communicate with the sink device 104a. The network beacon message may comprise information indicating the presence of the network and/or information indicating a timing, a periodicity, and/or an operating channel of the transmission of the cluster beacon messages. The information (e.g. information indicating the presence of the network and/or information indicating a timing, a periodicity, and/or an operating channel of the transmission of the cluster beacon messages) comprised in the network beacon message may comprise information of the device 104 transmitting the cluster beacon message itself. In addition, the information (e.g. information indicating the presence of the network and/or information indicating a timing, a periodicity, and/or an operating channel of the transmission of the cluster beacon messages) comprised in the network beacon message may comprise information of one or more neighbouring devices of the device 104 transmitting the cluster beacon message.

The term "neighbouring device" means throughout this application a device 104 whose transmissions may be correctly received by a receiving device. An extended meaning of the term "neighbouring radio device" takes into account the neighbour(s) of the neighbour(s) of the radio device, i.e. multi-hop neighbour(s), such as two-hop neighbour(s), three-hop neighbour(s), four-hop neighbour(s), and/or so on. The term "neighbourhood of a device" means throughout this application one or more devices 104 whose transmissions may be correctly received by a receiving device 104. An extended meaning of the term "neighbourhood of a device" takes into account the neighbour(s) of the neighbour(s) of the device, i.e. multi-hop neighbourhood, such as two-hop neighbourhood, three-hop neighbourhood, four-hop neighbourhood, and/or so on.

The system 100 is used for timing of beacon messages in the wireless communication network 102. The system 100 comprises at least one cluster head device 104b associated with at least one beaconing cluster member device 104c configured to transmit beacon messages. The beacon messages transmitted by the beaconing cluster member device 104c are primarily indented to possible cluster member devices 104c, 104d of said beaconing cluster member devices 104c (if the beaconing cluster member device 104c is operating also as a cluster head device 104b for another cluster 108a-108c), but other devices 104 within the neighbourhood of the beaconing cluster member device 104c, including the cluster head device 104b associated with the beaconing cluster member device 104c, may receive the beacon messages transmitted by the beaconing cluster member device 104c. The at least one cluster head device 104b and its associated at least one beaconing cluster member device 104c belong to the plurality of communication devices 104 of the network 102. The system 100 is explained from now on in this application mainly by using one cluster head device 104b associated with one beaconing cluster member device 104c, which belong to the system 100, operate in the network 102, and form a group of devices 104b, 104c. These devices 104b, 104c however correspond with the devices 104. The system 100 may also comprise a plurality of other devices 104, 104a, 104d which also participate to a formation of said group, whereupon the group comprises devices 104, 104a, 104b, 104c, 104d.

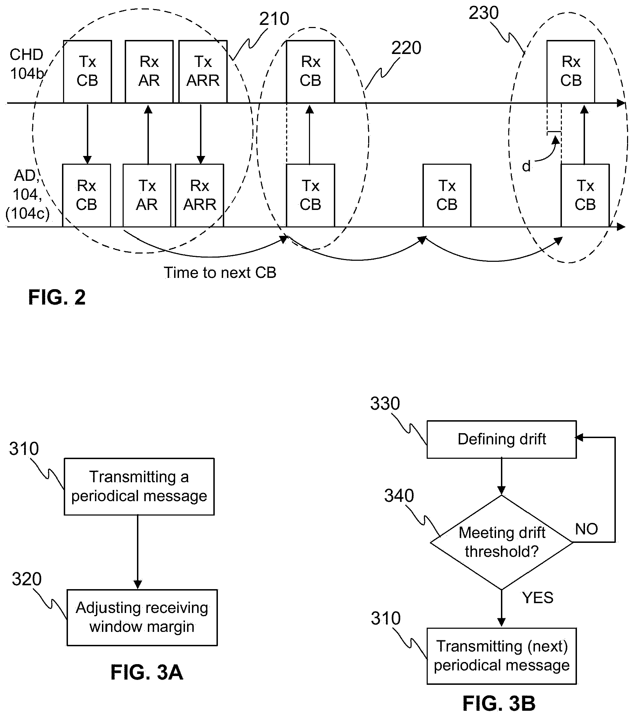

To become a cluster member device 104c, 104d of a cluster 108a-108c, the device 104 needs to associate with the cluster head device 104b of the cluster 108a-108c. In other words, the cluster member device 104c, 104d and the cluster head device 104b are associated with each other. Figure 2 illustrates schematically an example of the association process 210 between the associating device (AD) 104 and the cluster head device (CHD) 104b. The association 210 may comprise receiving, by the associating device 104, a cluster beacon (CB) message from the cluster head device 104b, and transmitting, by the associating device 104, an association request (AR) message to the cluster head device 104b. The association request message may comprise timing information indicating a timing of a next beacon message to be transmitted by the associating device 104, i.e. a beacon timing of the associating device 104, and frequency information indicating a frequency channel of the next beacon message to be transmitted by the associating device 104. The beacon timing of the associating device 104 is referred in Figure 2 with the term "Time to next CB". The association 210 may further comprise transmitting, by the cluster head device 104b, an association request response (ARR) message indicating either approval of the association request or rejection of the association request to the associating device 104. After approved association, the associating device 104 becomes a cluster member device 104c, 104d of the cluster 108a-108c and the cluster head device 104b and the cluster member device 104c, 104d are associated with each other. In this example the associating device 104 becomes a beaconing cluster member device 104c.

The example of Figure 2 further shows a first example communication 220 between the associated device 104c and the cluster head device 104b, wherein the cluster head device 104b receives the cluster beacon (CB) message transmitted by the associated device 104 (being the beaconing cluster member device 104c) with no (or minor) time drift after the association. As the associating device 104 has become the beaconing cluster member device 104c, the term beaconing cluster member device 104c is used in the explanation of this example from now on to mean the associated associating device 104. Every cluster beacon (CB) message transmitted by the beaconing cluster member device 104c to the cluster head device 104b do not necessarily comprise useful information. Therefore, the cluster head device 104b will not spend time and energy for listening to every cluster beacon and therefore the cluster head device 104b starts to drift from the beacon timing of the beaconing cluster member device 104c indicated by the timing information comprised in the association message received from the beaconing cluster member device 104c. A second example communication 230 between the beaconing cluster member device 104c and the cluster head device 104b, wherein the cluster head device 104b starts to drift from the beacon timing of the beaconing cluster member device 104c indicated by the timing information comprised in the association message received from the beaconing cluster member device 104c. Similarly, also the beaconing cluster member device 104c starts to drift from the beacon timing of the cluster head device 104b. The (time) drift (d) in the example of Figure 2 represents the drift of the beacon timing of the beaconing cluster member device 104c relative to the cluster head device 104b. The cluster head device 104b needs to begin receiving of the beacon message (CB) from the beaconing cluster member device 104c the time drift (d) (i.e. a time duration corresponding to the drift) earlier than indicated by the timing information comprised in the association message to ensure that it is able to receive the cluster beacon message (CB) from the start of the cluster beacon message (CB). The drift (d) may increase and the cluster member device 104c may also change its frequency channel used for transmitting the cluster beacon messages, thus it becomes inefficient for the cluster head device 104b to look for the cluster beacon messages transmitted by the beaconing cluster member device 104c. The beacon timing, the drift, and/or any other timing information is valid at the moment when it is defined and after the definition it starts to vary. In other words, the perception of time of the cluster head device 104b and the beaconing cluster member device 104c are not absolute and the time information of both devices 104b, 104c vary in comparison to an ideal timing information and also in comparison to the timing information of each other.

Figure 3A illustrates schematically an example of a timing method for timing of beacon messages in the wireless communication network 102 by the above discussed timing system 100. Figure 3A illustrates the timing method as a flowchart. The method is mainly explained by using the system 100 comprising one cluster head device 104b associated with one beaconing cluster member device 104c. The system 100 may additionally comprise at least one other cluster head device 104b, e.g. one, two, three, four, or more other cluster head devices, each cluster head device 104b associated with at least one beaconing cluster member device 104c, e.g. one, two, three, four, or more beaconing cluster member devices. Although the method is described by using the system 100 comprising one cluster head device 104b and one beaconing cluster member device 104c, each cluster head device 104b of the system 100 may be configured independently to perform one or more method steps (i.e. operations) of the cluster head device 104b as will be described for the one cluster head device 104b and each beaconing cluster member device 104c of the system 100 may be configured independently to perform one or more method steps (i.e. operations) of the beaconing cluster member device 104c as will be described for the one beaconing cluster member device 104c.

At a step 310, the beaconing cluster member device 104c transmits periodically a periodical message to its cluster head device 104b. The periodical message comprises timing information indicating a timing of a next beacon message of the beaconing cluster member device 104c transmitting the periodical message, i.e. the beacon timing of the beaconing cluster member device 104c. The beacon timing indicates the timing when the beaconing cluster member device 104c, which transmitted the periodical message, transmits the next beacon message. If the cluster 108a-108c comprises more than one beaconing cluster member device 104c, each of the beaconing cluster member devices 104c of the cluster 108a-108c transmits periodically the periodical message to its cluster head device 104b, i.e. to the respective cluster head device 104b, i.e. to the cluster head device 104b of the cluster 108a-108c comprising the beaconing cluster member device 104c. If the system 100 comprises more than one cluster head device 104b (i.e. more than one clusters 108a-108c), the at least one beaconing cluster member device 104c of each cluster 108a-108c transmits periodically the periodical message to its cluster head device 104b belonging to the same cluster 108a-108c. The periodical message may further comprise frequency information indicating a frequency channel of the next beacon message to be transmitted by said beaconing cluster member device 104c. The beacon message may for example be the cluster beacon message. Transmitting by the beaconing cluster member device 104c periodically the periodical message to its cluster head device 104b enables information share from the beaconing cluster member device 104c to the respective cluster head device 104b in an effective manner. This in turn enables that the cluster head device 104b does not need to scan repeatedly (on different frequency channels) to find the beacon messages transmitted by its at least one beaconing cluster member device 104c. In addition, it enables that the beaconing cluster member device 104c does not need to repeat the actual beacon content to its cluster head device by using a point-to-point communication. The actual beacon content may for example comprise identification information of the transmitting device (e.g. network ID and/or transmitter address), the timing information, and/or allocation information (e.g. resource allocation information element (IE), random access resource IE, broadcast indication IE, and/or neighbouring IE).

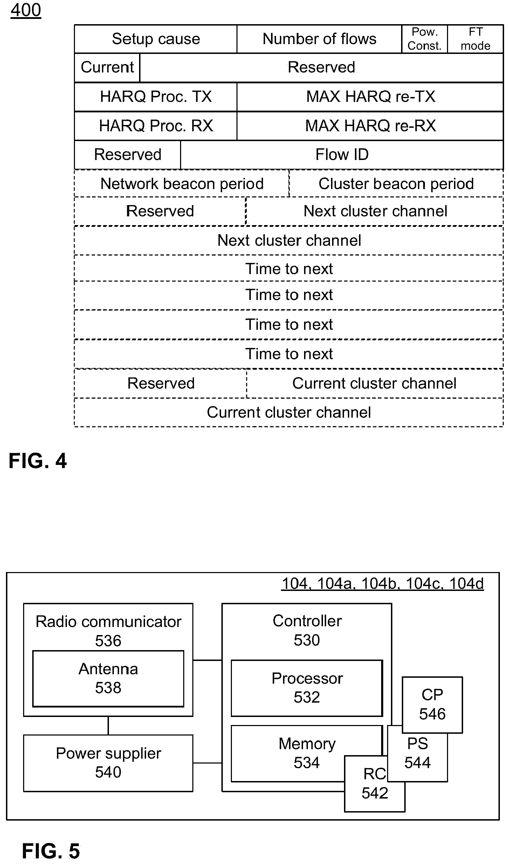

The periodical message may be an association request message 400. In other words, the beaconing cluster member device 104c may be re-associating with the cluster head device 104b periodically, by transmitting the association request message 400 to the cluster head device 104b. The re-association is a light-weight task for the beaconing cluster member device 104c as the beaconing cluster member device 104c anyway is configured to follow the beacon timing of its cluster head device 104b by receiving cluster beacon messages transmitted by the cluster head device 104b. By receiving the cluster beacon messages transmitted by the cluster head device 104b, the beaconing cluster member device 104c is aware that the cluster head device 104b is still present, and/or that whether the cluster head device 104b has any information to be transmitted to the beaconing member device 104c. Alternatively or in addition, if the beaconing cluster member device 104c has any information to be transmitted to the cluster head device 104b, the received cluster beacon messages comprises receiving timing information representing a timing when the cluster head device 104b may receive any information from the beaconing cluster member device 104c. However, if the beaconing cluster member device 104c cannot receive the cluster beacon messages from its cluster head device 104b for some reason, e.g. due to the change of a location of the cluster head device 104c and/or to the change of the frequency channel used for transmitting the cluster beacon messages, the beaconing cluster member device 104b may try to receive network beacon messages on a common network channel to find the cluster head device 104b and/or to associate with another cluster head device 104b. Furthermore, if there is no actual data traffic between the beaconing cluster member device 104c and the cluster head device 104b, the beaconing cluster member device 104c needs to indicate its presence to the cluster head device 104b periodically to avoid losing its membership e.g. due to a timeout. This enables that the periodical messaging (e.g. in form of the re-association) comes almost as free, because the beacon cluster member device 104c may anyway need to perform signalling to the cluster head device 104b in order to remain its membership. The association request message 400 may for example be an association request message according to the DECT-2020. In other words, the association request message 400 may be an association request message as defined in the DECT-2020 medium access control (MAC) specification. Figure 4 illustrates a non-limiting example format for the association request message 400. The example association request message 400 of Figure 4 is the association request message according to the DECT-2020. The definitions for the fields of the example association request message 400 of Figure 4 are defined in Table 1.

Table 1: Definitions for the fields of the example association request message 400 of Figure 4.

| Field | Bits | Definition |
|---|---|---|
| Setup cause | 3 | The setup cause of the association |
| Number of flows | 3 | Number of different flows the device would like to setup |
| Power const | 1 | 0: The devices operating in sink mode does not have power constrains. 1: The device operating in sink mode has power constrains. |
| FT mode | 1 | 0: The device operates only in non-router mode. 1: The device operates router mode. The device shall include Network Beacon period, Cluster beacon Period, Next Cluster channel and Time to Next fields. |
| Current | 1 | 0: The current cluster channel is the same as next cluster channel. The current cluster channel field is not included. 1: The current cluster channel is not same as next cluster channel. The current cluster channel field is included. |
| HARQ Proc. TX | 3 | Number of HARQ processes the device is requesting to use for its transmission. |
| MAX HARQ re-TX | 5 | The maximum HARQ re-transmission delay that device uses in its transmissions. |
| HARQ Proc. RX | 3 | Number of HARQ processes the device is requesting to use for its reception. |
| MAX HARQ re-RX | 5 | The maximum HARQ re-transmission delay that the device expects in reception. |
| Flow ID | 6 | ID of the flow to be established. |
| Network beacon period | 4 | Network beacon period (in ms). |
| Cluster beacon period | 4 | Cluster beacon transmission period (in ms). |
| Next cluster channel | 13 | Operating channel of the cluster for next cluster beacon period. |
| Time to next | 32 | Time (in microseconds) until the next beacon period starts, i.e. the beacon timing. |
| Current Cluster channel | 13 | Operating channel of the cluster for current cluster beacon period. |

At a step 320, in response to receiving the periodical message from the beaconing cluster member device 104c, the cluster head device 104b may adjusts its receiving window margin for receiving the next beacon message from the beaconing cluster member device 104c based on the timing information comprised in the received periodical message. This enables that the cluster head device 104b may efficiently find the start of the next cluster beacon to be transmitted by the beaconing cluster member device 104c. If the cluster head device 104b is associated with more than one beaconing cluster member device 104c, the cluster head device 104b may adjust separately its receiving window margin for receiving the next beacon message from each beaconing cluster member device 104c based on the timing information comprised in the received periodical message from the respective beaconing cluster member device 104c. In other words, the cluster head device 104b may have separate receiving window margins for receiving beacon messages from more than one beaconing cluster member device 104c and the cluster head device 104b may adjust separately each receiving window margin based on the timing information comprised in the received periodical message from the respective beaconing cluster member device 104c. Alternatively, the cluster head device 104b may have a common receiving window margin for receiving beacon messages from more than one beaconing cluster member device 104c with which the cluster head device 104b is associated. In that case, the cluster head device 104b may adjust its common receiving window margin for receiving the next beacon message from the more than one beaconing cluster member device 104c based on the timing information comprised in the received periodical messages from the more than one beaconing cluster member devices 104c.

The beaconing cluster member device 104c may transmit the next periodical message to its cluster head device 104b in response to detecting that a drift (d) of its beacon timing meets a drift threshold value. In other words, the beaconing cluster member device 104c may define the interval between the transmission of the previous periodical message and the transmission of the next periodical message based on detecting that the drift of the beacon timing of the beaconing cluster member device 104c meets the drift threshold value. The drift threshold value may be network specific, i.e. all beaconing cluster member devices 104c of the network 102 may have the same drift threshold value. Alternatively, the drift threshold value may be a device specific, i.e. one or more beaconing cluster member devices 104c of the network 102 may each have a separate drift threshold value. Alternatively, the drift threshold value may be a local threshold value. Each cluster head device 104b may provide the local threshold value to its associated beaconing cluster member devices 104c. The local threshold value may be the same for all beaconing cluster member devices 104c of the cluster head device 104b or the cluster head device 104b may provide a different local threshold value to one or more beaconing cluster member devices 104c. The local threshold value enables that the cluster head device 104b may control the processing of the drift. For example, the local threshold value may be included, e.g. as a bit-field, in a beacon message or in a control message, e.g. in the association response message. The drift threshold value together with the drift (d) of the beacon timing of the beaconing cluster member device 104c defines the interval between the transmission of the previous periodical message and the transmission of the next periodical message. The verb "meet" in context of the drift threshold value is used in this patent application to mean that a predefined condition is fulfilled. For example, the predefined condition may be that the drift threshold value is reached and/or exceeded. Figure 3B illustrates schematically an example of the method steps for defining the interval between the transmission of the previous periodical message and the transmission of the next periodical message.

At the step 330, the beaconing cluster member device 104c defines the drift (d) of its beacon timing. The drift of the beacon timing of the beaconing cluster member device 104c is a time drift relative to the cluster head device 104b. The beaconing cluster member device 104c may for example define the drift (d) of its beacon timing on a basis of a drift of a beacon timing of the cluster head device 104b and a time expired from the transmission of the previous periodical message to the cluster head device 104b by the beaconing cluster member device 140c. The drift of the beacon timing of the cluster head device 104b is a time drift relative to the beaconing member device 104c.

Next an example of defining by the beaconing cluster member device 104c the drift of the beacon timing of the cluster head device 104b is described. The drift of the beacon timing of the cluster head device 104b may also be defined by using any other definition procedure. The beaconing cluster member device 104c may first define the drift of the beacon timing of the cluster head device 104b from a perspective of the beaconing cluster member device 104c based on the time drift between two consecutive beacon messages received from the cluster head device 104b by comparing the starting times (i.e. the beacon timings) of the transmissions of the two consecutive beacon messages received from the cluster head device 104b. The two consecutive beacon messages may be network beacon messages or cluster beacon messages. Alternatively, one of the two consecutive beacon messages may be a network beacon message and the other one may be a cluster beacon message or vice versa. The drift of the beacon timing of the cluster head device 104b ($d_{CH}$), may for example be defined by using the following equation:

$$d_{CH} = t_{CB\_n} - t_{CB\_n-1}, \qquad\qquad \_(1)$$

where $t_{CB\_n}$ and $t_{CB\_n-1}$ are the starting times of the transmissions of the two consecutive beacon messages, i.e. beacon timings of the two consecutive beacon messages. The defined drift ($d_{CH}$) may be proportioned to a beacon period, i.e. an access cycle length, informed by the cluster head device 104b, e.g. in a beacon message (a cluster beacon message and/or a network beacon message) transmitted by the cluster head device 104b, to define the drift of the beacon timing of the cluster head device 104b in parts per million (ppm). The drift of the beacon timing of the cluster head device 104b in ppm ($d_{CH\_ppm}$) may for example be defined by using the following equation:

$$d_{CH\_ppm} = \frac{d_{CH}}{AL}, \qquad (2)$$

where $d_{CH}$ is the drift of the beacon timing of the cluster head device 104b defined by using the above presented equation (1) and AL is the access cycle length informed by the cluster head device 104b. In addition to the drift of the beacon timing of the cluster head device 104b, the beaconing cluster member device 104c may also define accuracy of the drift in ppm and the timing of the next beacon message transmitted by the cluster head device 104b. The accuracy of the drift in ppm ($d_{CH\_ppm\_acc}$) may be defined based on the following equation:

$$d_{CH\_ppm\_acc} = \sum_{i=0}^{n} d_{CH\_ppm}(n). \qquad (3)$$

The timing of the next beacon message transmitted by the cluster head device 104b, i.e. the starting time of the transmission of the next beacon message by the cluster head device 104b, ($t_{CBnext}$) may be defined based on the following equation:

$$t_{CB_{next}} = t_{CB} + AL - (d_{CH\_ppm\_acc} \times AL), \qquad (4)$$

where tce is the starting time of the transmission of the previous beacon message transmitted by the cluster head device 104b.

Next an example of defining the drift of its beacon timing by the beaconing cluster member device 104c itself is described. The beaconing cluster member device 104c may for example define the drift of its beacon timing (d) by using the following equation:

$$d = d_{CH\_ppm} \times (t_{now} - t_{previous\_PM}), \qquad (5)$$

where $d_{CH\_ppm}$ is the defined drift of the beaconing timing of the cluster head device 104b (by using the above-presented equation (2) for defining the $d_{CH\_ppm}$ or by using any other equation or algorithm for defining the $d_{CH\_ppm}$), $t_{now}$ is the current time, and $t_{previous\_PM}$ is the timing of the transmission of the previous periodical message to the cluster head device 104b by the beaconing cluster member device 104c. The time expired from the transmission of the previous periodical message to the cluster head device 104b by the beaconing cluster member device 140c is defined by the equation: $t_{now} - t_{previous\_PM}$.

At the step 340, the beaconing cluster member device 104c compares the defined drift (d) of its beacon timing to the drift threshold value. If the defined drift (d) meets, i.e. reaches and/or exceeds, the drift threshold value, the beaconing cluster member device 104c may transmit the next periodical message to its cluster head device 104b as defined in the step 310 above. If the defined drift (d) does not meet the drift threshold value, the beaconing cluster member device 104c may continue defining the drift (d) at a later instant of time.

Alternatively or in addition, the beaconing cluster member device 104c may transmit the next periodical message to its cluster head device 104b in response to receiving from the cluster head device 104b a beacon message comprising a request to transmit the next periodical message to its cluster head device 104b. For example, the cluster head device may detect that it has lost its synchronization with the beaconing cluster member device 104c.

According to an example, the beaconing cluster member device 104c may further transmit to its cluster head device 104b neighbouring timing information indicating a timing of a next beacon message of one or more neighbouring devices of the beaconing cluster member device 104c, i.e. the beacon timing of the one or more neighbouring devices. The one or more neighbouring devices belong to the plurality of communication devices 104 of the wireless communication network 102. For example, the beaconing cluster member device 104c may transmit the neighbouring timing information to its cluster head device 104b by including the neighbouring timing information in the next beacon message to be transmitted to the cluster head device 104b. The next beacon message is the next beacon message whose timing information is comprised in the periodical message, e.g. the association message, transmitted to the cluster head device 104b. Alternatively, the beaconing cluster member device 104b may transmit the neighbouring timing information to its cluster head device 104b together with the periodical message, e.g. within the association request message. Transmitting also the neighbouring timing information by the beaconing cluster member device 104c to its cluster head device 104b enables that the cluster head device 104b may receive timing information on a wider group of devices 104 at the same time.

Figure 5 illustrates a device 104 (104a, 104b, 104c, 104d) that is able to communicate in the network 102 and to perform the relevant features (steps) of timing method as above has been explained. In other words, the device 104 that is able to operate as the cluster head device 104b and to perform the features of the timing method relevant to the cluster head device 104b as above has been explained and/or or as the beaconing cluster member device 104c and to perform the features of the timing method relevant to the beaconing cluster member 104c as above has been explained. The device 104 may also operate as the sink node 104a and/or as the cluster member device 104d operating as the non-routing node.

The device 104 comprises the controller (control part) 530 that controls operations of its parts 532, 534, 536, 538, 540 so that the device 104 operates as above has been explained.

The controller 530 comprises a processor (processor part) 532 that performs operator-initiated and/or computer program-initiated instructions, and processes data in order to run applications. The processor 532 may comprise at least one processor, e.g. one, two, three, four, or more processors.

The controller 530 also comprises the memory (memory part) 534 in order to store and to maintain data. The data may be instructions, computer programs, and data files. The memory 534 comprises at least one memory, e.g. one, two, three, four, or more memories.

The device 104 also comprises the radio communicator (radio communication part, data transferer) 536 and an antenna (antenna part) 538 that the controller 530 uses in order to send commands, requests, messages, and data to at least one of entities in the system 100, e.g. devices 104, via the antenna 538. The radio communicator 536 also receives commands, requests, and data from at least one of entities in the system 100 and/or in the network 102, e.g. devices 104, via the antenna 538. The communication between the radio communicator 536 of the device 104 and other entities in the system 100 and/or in the network 102 is provided through the antenna 538 wirelessly.

The device 104 may further comprise a power supplier (power supply part) 540. The power supplier 540 comprises components for powering the device 104, e.g. a battery and a regulator.

The memory 534 stores at least a radio communication application 542 for operating (controlling) the radio communicator 536, and a power supply application 544 for operating the power supplier 540.

The memory 534 also stores a computer program (computer software, computer application) 546, which uses at least one of parts 536, 538, 540 in order to perform at least the operations of the device 104 explained above in context of the previous figures, when it is executed (run) in a computer, e.g. in the device 104, by means of the controller 530.

The computer program 546 may be stored in a tangible, non-volatile computer-readable storage medium, e.g. a Compact Disc (CD) or Universal Serial Bus (USB) -type storage device.

The specific examples provided in the description given above should not be construed as limiting the applicability and/or the interpretation of the appended claims. Lists and groups of examples provided in the description given above are not exhaustive unless otherwise explicitly stated.

**Claims**

1. A timing system (100) for a wireless communication network (102) comprising a plurality of communication devices (104, 104a, 104b, 104c, 104d), the timing system comprises at least one cluster head device (104b) associated with at least one beaconing cluster member device (104c) configured to transmit beacon messages,

   wherein the at least one cluster head device (104b) and its associated at least one beaconing cluster member device (104c) belong to the plurality of communication devices (104, 104a, 104b, 104c, 104d) of the wireless communication network (102), and
   wherein the at least one beaconing cluster member device (104c) is configured to periodically transmit a periodical message to its cluster head device (104b), wherein the periodical message comprises timing information indicating a timing of a next beacon message of the beaconing cluster member device (104c) transmitting the periodical message.

2. The timing system (100) according to claim 1, wherein in response to receiving the periodical message from its associated at least one beaconing cluster member device (104c) the cluster head device (104b) is configured to adjust its receiving window margin for receiving the next beacon message from the at least one beaconing cluster member device (104c) based on the timing information comprised in the received periodical message.

3. The timing system (100) according to any of the preceding claims, wherein the at least one beaconing cluster member device (104c) is configured to transmit the next periodical message to its cluster head device (104b) in response to detecting that a drift of its beacon timing meets a drift threshold value.

4. The timing system (100) according to claim 3, wherein the at least one beaconing cluster member device (104c) is configured to define the drift of its beacon timing on a basis of a drift of a beacon timing of the cluster head device (104b) and a time expired from the transmission of the previous periodical message to the cluster head device (104b) by the beaconing cluster member device (104c).

5. The timing system (100) according to any of the preceding claims, wherein the at least one beaconing cluster member device (104c) is configured to transmit the next periodical message to its cluster head device (104b) in response to receiving from the cluster head device (104b) a beacon message comprising a request to transmit the next periodical message.

6. The timing system (100) according to any of the preceding claims, wherein the periodical message is an association request message (400).

7. The timing system according to claim 6, wherein the association request message is an association request message (400) according to Digital European Cordless Telecommunication 2020 (DECT-2020).

8. The timing system according to any of the preceding claims, wherein the at least one beaconing cluster member device (104c) is further configured to transmit to its cluster head device neighbouring timing information indicating a timing of a next beacon message of one or more neighbouring devices of the at least one beaconing cluster member device (104c), wherein the one or more neighbouring devices belong to the plurality of communication devices (104, 104a, 104b, 104c, 104d) of the wireless communication network (102).

9. The timing system according to claim 8, wherein the at least one beaconing cluster member device (104c) is configured to transmit the neighbouring timing information to its cluster head device (104b) by including the neighbouring timing information in the next beacon message to be transmitted.

10. A timing method for a wireless communication network (102) comprising a plurality of communication devices (104, 104a, 104b, 104c, 104d), the method comprising following steps of:

   presenting at least one cluster head device (104b) associated with at least one beaconing cluster member device (104c) configured to transmit beacon messages, wherein the at least one cluster head device (104b) and its associated at least one beaconing cluster member device (104c) belong to the plurality of communication devices (104, 104a, 104b, 104c, 104d) of the wireless communication network (102); and
   transmitting (310) periodically, by the at least one beaconing cluster member device (104c), a periodical message to its cluster head device (104b), wherein the periodical message comprises timing information indicating a timing of a next beacon message of the beaconing cluster member device (104c) transmitting the periodical message.

11. A beaconing cluster member device (104c) for a wireless communication network (102), the beaconing cluster member device (104c) comprises:

   a controller (530), and
   a radio communicator (536) for operating as a radio node device,
   wherein beaconing cluster member device (104c) is configured to:
   transmit beacon messages; and
   transmit periodically, by the radio communicator (536), a periodical message to its cluster head device (104b), wherein the periodical message comprises timing information indicating a timing of a next beacon message of the beaconing cluster member device (104c) transmitting the periodical message.

12. A timing method for the beaconing cluster member device (104c) according to claim 11, the method comprises following step of transmitting (310) periodically, by a radio communicator (536) of a beaconing cluster member device (104c), a periodical message to its cluster head device (104b), wherein the periodical message comprises timing information indicating a timing of a next beacon message of the beaconing cluster member device (104c) transmitting the periodical message.

**13.** A computer program (546) comprising instructions, which, when the computer program is executed by a computer, cause the computer to carry out at least the steps of the method according to claim 12.

**14.** A tangible non-volatile computer readable medium comprising the computer program (546) according to claim 13.

**FIG. 1A**

**FIG. 1B**

FIG. 2

**FIG. 3A**

310 Transmitting a periodical message

320 Adjusting receiving window margin

**FIG. 3A**

330 Defining drift

340 Meeting drift threshold? — NO

YES

310 Transmitting (next) periodical message

**FIG. 3B**

400

| Setup cause | Number of flows | Pow. Const. | FT mode |
|---|---|---|---|
| Current | Reserved | | |
| HARQ Proc. TX | MAX HARQ re-TX | | |
| HARQ Proc. RX | MAX HARQ re-RX | | |
| Reserved | Flow ID | | |
| Network beacon period | Cluster beacon period | | |
| Reserved | Next cluster channel | | |
| Next cluster channel | | | |
| Time to next | | | |
| Time to next | | | |
| Time to next | | | |
| Time to next | | | |
| Reserved | Current cluster channel | | |
| Current cluster channel | | | |

## FIG. 4

104, 104a, 104b, 104c, 104d

## FIG. 5

**EUROPEAN SEARCH REPORT**

Application Number

EP 23 16 6720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "ETSI TS 103 636-4 V1.3.1 DECT-2020 New Radio (NR); Part 4: MAC layer; Release 1", ETSI, 1 December 2021 (2021-12-01), XP093042030, Retrieved from the Internet: URL:https://www.etsi.org/deliver/etsi_ts/103600_103699/10363604/01.03.01_60/ts_10363604v010301p.pdf [retrieved on 2023-04-25] | 1,2,5-14 | INV. H04W56/00 |
| A | * Section 5.1 * * Section 5.7, 5.8 * * Section 6.4.2.2 – 6.4.2.4 * * Section 6.4.2.6 * ----- | 3,4 | |
| A | WIREPAS OY: "DECT2020 Routing in Mesh system operation", ETSI DRAFT; DECT(20)000084, EUROPEAN TELECOMMUNICATIONS STANDARDS INSTITUTE (ETSI), 650, ROUTE DES LUCIOLES ; F-06921 SOPHIA-ANTIPOLIS ; FRANCE , 23 March 2020 (2020-03-23), pages 1-7, XP014361654, Retrieved from the Internet: URL:docbox.etsi.org/DECT/DECT/05-CONTRIBUTIONS/2020/DECT(20)000084_DECT2020_Routing_in_Mesh_system_operation.docx [retrieved on 2020-03-23] * Section "Mesh system operation"; pages 2-5 * ----- -/-- | 1-14 | TECHNICAL FIELDS SEARCHED (IPC) H04W |

The present search report has been drawn up for all claims

| Place of search | Date of completion of the search | Examiner |
|---|---|---|
| The Hague | 30 August 2023 | Wijting, Carl |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

page 1 of 2

**EUROPEAN SEARCH REPORT**

Application Number

EP 23 16 6720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DSPG EDINBURGH LTD: "Impact of Timing Drift on Channel Access Measurements", ETSI DRAFT; DECT(20)000266, EUROPEAN TELECOMMUNICATIONS STANDARDS INSTITUTE (ETSI), 650, ROUTE DES LUCIOLES ; F-06921 SOPHIA-ANTIPOLIS ; FRANCE , 7 September 2020 (2020-09-07), pages 1-4, XP014375664, Retrieved from the Internet: URL:docbox.etsi.org/DECT/DECT/05-CONTRIBUT IONS/2020/DECT(20)000266_Impact_of_Timing_ Drift_on_Channel_Access_Measurements.doc [retrieved on 2020-09-07] * Section "Impact of Timing Drift on Channel Access Measurements"; pages 2-4 * ----- | 1-14 | |
| A | US 2021/392656 A1 (PIRSKANEN JUHO [FI] ET AL) 16 December 2021 (2021-12-16) * paragraph [0051] * * paragraphs [0035] - [0037] * * paragraph [0073] * * figures 1, 2A, 2B, 2C * ----- | 1-14 | **TECHNICAL FIELDS SEARCHED (IPC)** |

The present search report has been drawn up for all claims

| Place of search | Date of completion of the search | Examiner |
|---|---|---|
| The Hague | 30 August 2023 | Wijting, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 16 6720

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2023

| Patent document cited in search report | Publication date | Patent family member(s) | Publication date |
|---|---|---|---|
| US 2021392656 A1 | 16-12-2021 | AU 2021287316 A1 | 19-01-2023 |
| | | BR 112022025308 A2 | 28-02-2023 |
| | | CA 3186327 A1 | 16-12-2021 |
| | | EP 3927081 A1 | 22-12-2021 |
| | | FI 20205602 A1 | 13-08-2021 |
| | | IL 298835 A | 01-02-2023 |
| | | JP 2023529495 A | 10-07-2023 |
| | | KR 20230024961 A | 21-02-2023 |
| | | US 2021392656 A1 | 16-12-2021 |
| | | WO 2021250321 A1 | 16-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7830838 B

- US 10499264 B